# FASCICULE DE BREVET EUROPEEN

(11) **EP 2 480 774 B1**
(45) Date de publication et mention de la délivrance du brevet: **05.10.2016**
(21) Numéro de dépôt: 10763755.5
(22) Date de dépôt: 26.08.2010
(51) Int. Cl.: F02C 7/232, F02C 9/26

(54) **DOSEUR DE CARBURANT AYANT UN DISPOSITIF DE REGULATION AMELIORE**
VORRICHTUNG ZUM DOSIEREN VON KRAFTSTOFF MIT VERBESSERTER REGELUNGSEINRICHTUNG
FUEL METERING VALVE WITH IMPROVED CONTROL DEVICE

(30) Priorité: 23.09.2009 FR 0956540
(43) Date de publication de la demande: 01.08.2012
(73) Titulaire: Turbomeca, 64510 Bordes (FR)
(72) Inventeur: BENEZECH, Philippe, Jean, René, Marie, F-64140 Lons (FR); FACCA, Bruno, F-64160 Morlass (FR); LEGLISE, Ludovic, Alexandre, F-64000 Pau (FR); ZORDAN, Cédric, Roger, F-64510 Narcastet (FR)
(74) Mandataire: Milien, Jean-Baptiste Aurélien
(86) Numéro de dépôt international: PCT/FR2010/051779
(87) Numéro de publication internationale: WO 2011/036363

(56) Documents cités:
- EP-A2- 0 288 411
- FR-A1- 2 339 203
- GB-A- 2 296 960
- US-A- 2 958 376
- US-A- 3 005 464
- US-A- 5 078 173
- US-A- 5 433 237

## Description

La présente invention concerne le domaine de la régulation de l'alimentation en carburant d'un moteur telle une turbomachine d'un engin volant.

La présente invention concerne plus particulièrement un doseur de carburant pour un moteur telle une turbomachine d'un engin volant destiné à être alimenté en carburant par une pompe ayant une entrée et une sortie, le doseur comportant :
- une vanne de dosage ayant une entrée et une sortie, ladite vanne, lorsqu'elle est montée, étant disposée en aval de la sortie de la pompe ;
- un circuit de refoulement, lorsqu'il est monté, reliant l'entrée de la vanne de dosage et l'entrée de la pompe ;
- un dispositif de régulation de pression comportant un clapet mobile apte à fermer et ouvrir le circuit de refoulement, une surface de détection de pression différentielle fixée au clapet délimitant axialement une première chambre en communication avec l'entrée de la vanne de dosage et une deuxième chambre en communication avec la sortie de la vanne de dosage, un premier ressort disposé dans la deuxième chambre tout en étant fixé à la surface de détection de manière à exercer une poussée axiale sur le clapet dans un sens qui tend à obturer le circuit de refoulement.

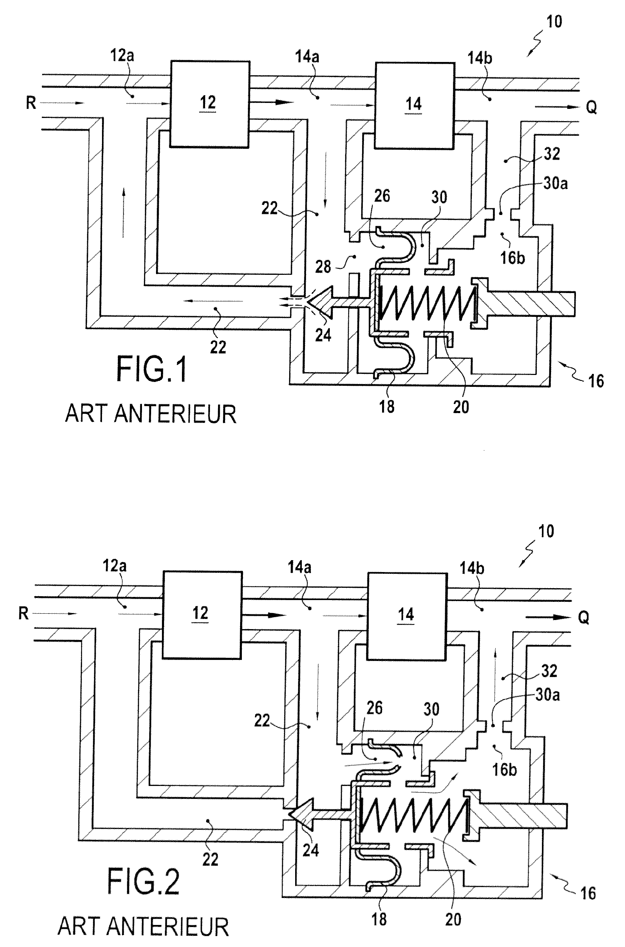

Un tel doseur **10,** déjà connu par ailleurs, a été représenté sur la figure **1****.** De manière connue, le doseur est alimenté en amont par la pompe **12** qui fournit un débit de carburant supérieur au débit nécessaire au moteur. La vanne de dosage **14** est disposée entre la pompe et les injecteurs de la chambre de combustion. Cette vanne est conçue pour délivrer un débit **Q** qui est fonction de son ouverture, laquelle est commandée par un système de régulation de vanne.

Pour obtenir un débit qui dépend principalement de l'ouverture de la vanne de dosage **14,** la différence de pression entre la sortie **14b** et l'entrée **14a** de la vanne de dosage doit être maintenue constante, à une valeur prédéterminée, ou à tout le moins dans une plage limitée. C'est le rôle du dispositif de régulation **16,** généralement appelé « vanne Delta-P ».

Pour ce faire, le dispositif de régulation **16** présente deux fonctions : la première fonction est de détecter une variation de pression entre la sortie et l'entrée de la vanne de dosage **14.** Cette première fonction est remplie par la surface de détection **18,** constituée ici par une membrane, et le premier ressort **20,** la membrane pouvant se déplacer axialement à l'encontre de la force du premier ressort si la différence de pression est supérieure à la valeur prédéterminée précitée.

Dans ce cas, le clapet **24** ouvre le circuit de refoulement **22,** ce qui provoque ou augmente l'écoulement de carburant depuis l'entrée de la vanne de dosage **14a** vers l'entrée **12**a de la pompe **12** à la suite de quoi le débit au travers de la vanne de dosage **14** diminue. Il s'ensuit que la différence de pression entre la sortie et l'entrée de la vanne de dosage diminue jusqu'à atteindre la valeur prédéterminée, ce qui provoque un mouvement de fermeture du clapet **24** sous l'action du premier ressort **20.**

On précise que le dispositif de régulation **16** est initialement calibré de sorte que le circuit de refoulement **22** demeure fermé par le clapet **24** lorsque la différence de pression est inférieure à la valeur prédéterminée.

Ainsi le dispositif de régulation maintient-il une différence de pression quasi-constante (égale à la valeur prédéterminée) entre la sortie et l'entrée de la vanne de dosage.

On précise aussi que l'action du clapet **24** est généralement progressive, ce qui permet au clapet **24** de trouver une position d'équilibre.

Un inconvénient de ce doseur apparaît en cas d'endommagement de la membrane. On comprend en effet que si la membrane vient à se percer ou à ne plus assurer sa fonction d'étanchéité entre les première et deuxième chambres, il n'y a plus de différence de pression entre les première et deuxième chambres du dispositif de régulation, à la suite de quoi la force exercée sur le clapet devient uniquement égale à la force exercée par le premier ressort. Il en résulte donc une fermeture du circuit de refoulement **22** et une augmentation sensible et indésirable du débit de carburant fourni au moteur.

Un but de la présente invention est de remédier à cet inconvénient en proposant un doseur de carburant amélioré dont le dispositif de régulation continue à maintenir une différence de pression constante malgré l'endommagement éventuel de la surface de détection **18.**

Des doseurs de carburant sont également connus par les documents US 2 958 376, US 3 005 464, EP 0 288 411 et FR 2 339 203.

L'invention atteint son but par le fait que le dispositif de régulation comporte en outre un piston délimitant axialement la deuxième chambre d'une troisième chambre reliée à la sortie de la vanne de dosage, ledit piston comportant un organe de couplage apte à coopérer avec le clapet, un second ressort disposé dans la troisième chambre tout en exerçant une poussée axiale sur le piston tendant à maintenir le piston découplé du clapet, le dispositif de régulation comportant également un canal faisant communiquer la deuxième chambre avec la troisième chambre.

Ainsi, en cas de rupture de la surface de détection, la pression dans la première chambre devient égale à la pression dans la deuxième chambre. Il s'ensuit que le clapet vient tout d'abord fermer le circuit de refoulement. Le carburant s'écoule alors à travers le canal qui joue alors le rôle de gicleur créant une perte de charge entre la deuxième chambre et la troisième chambre.

De préférence, mais non nécessairement, la surface de détection est constituée d'une membrane souple. On pourrait prévoir un soufflet ou tout autre surface équivalente.

Le déplacement du piston est piloté en fonction notamment de la différence de pression entre la troisième chambre et la deuxième chambre, qui correspond justement à la différence de pression entre la sortie de la vanne de dosage et l'entrée de la vanne de dosage.

Lorsque la différence de pression devient supérieure à une nouvelle valeur prédéterminée, dépendant de la raideur et de la pré-charge du second ressort, le piston se déplace vers la troisième chambre de détection à l'encontre de la force du second ressort jusqu'à ce que l'organe de couplage vienne en contact avec le clapet, à la suite de quoi le piston continue son déplacement tout en amenant avec lui le clapet. Il s'ensuit alors une ouverture du circuit de refoulement et une diminution de la différence de pression entre la sortie et l'entrée de la vanne de dosage. On comprend donc que le dispositif de régulation du doseur selon l'invention maintient constante cette différence de pression malgré l'endommagement de la membrane. Dans ce cas, ce sont donc le piston, les deux ressorts, le canal et le clapet qui jouent avantageusement le rôle de dispositif de régulation de secours.

Lors du fonctionnement normal de la membrane, le piston ne se déplace pas et le canal permet de s'assurer que la pression dans la deuxième chambre correspond à la pression du carburant en sortie de la vanne de dosage. Le clapet est alors libre de se déplacer par rapport au piston, selon le même principe que le doseur de l'art antérieur.

Selon un mode de réalisation préféré mais non exclusif, le clapet est monté à l'extrémité d'une cage coulissante qui s'étend axialement dans la deuxième chambre, le premier ressort étant logé à l'intérieur de la cage tout en étant maintenu à son extrémité opposée au clapet par une tige de réglage qui s'étend entre la deuxième chambre et la troisième chambre.

Cette tige de réglage permet de régler la pré-charge du ressort et donc la valeur prédéterminée de différence de pression que l'on souhaite maintenir aux bornes de la vanne de dosage.

De manière préférentielle, le canal formant gicleur est ménagé dans la tige de réglage. On pourrait cependant ménager le canal dans le piston, dans le boîtier, ou dans tout autre élément contigu à la chambre **26** et à la chambre 30 .

Selon une variante, le canal est arrangé de telle manière qu'il soit obturé par le piston lorsque ce dernier est couplé avec la cage. On comprend que lorsque le canal est obturé, le carburant ne s'écoule plus entre les deuxième et troisième chambres.

Un intérêt est de ne pas fournir un débit supplémentaire non désirable au moteur en ménageant au carburant une voie parallèle à la vanne de dosage **114.**

Selon une autre variante, le canal présente une première section et une seconde section supérieure à la première section, de sorte que le carburant s'écoule par la première section lorsque le piston n'est pas couplé à la cage tandis que le fluide s'écoule par la deuxième section lorsque le piston est couplé à la cage.

Par exemple, un intérêt peut être d'augmenter le débit afin que le système commandant la vanne de dosage puisse détecter un disfonctionnement de la membrane. En effet, le choix judicieux des dimensions du piston et de la raideur et précontrainte du second ressort **164** permet d'ajuster la différence de pression aux bornes de la vanne de dosage à une valeur identique quelque soit l'état de la membrane. Le doseur délivre alors le même débit quelque soit l'état de la membrane. Néanmoins, le concepteur peut désirer que, dans le cas d'un endommagement de la membrane, le débit augmente de façon contrôlée, afin qu'un effet sensible, non dangereux et détectable se produise sur le dispositif consommant le fluide dosé. Ainsi, le pilote peut-il avantageusement être informé que la régulation de pression différentielle est dorénavant assurée par la cage, le clapet, le premier ressort et le deuxième ressort.

Selon une variante préférée, le piston présente la forme d'un tiroir et l'organe de couplage comporte des doigts destinés à venir coopérer avec une surface de butée de la cage, de manière à pouvoir déplacer axialement la cage, vers la troisième chambre, et ouvrir le circuit de refoulement lorsque la surface de détection est endommagée.

Lorsque la surface de détection n'est pas endommagée, l'organe de couplage ne coopère pas avec le clapet. Autrement dit, le piston ne déplace pas le clapet et est totalement passif.

L'invention concerne également un circuit carburant d'une turbomachine comportant une pompe et un doseur de carburant selon l'invention.

L'invention porte enfin sur une turbomachine comportant un circuit de carburant selon l'invention.

L'invention sera mieux comprise et ses avantages apparaîtront mieux à la lecture de la description qui suit, d'un mode de réalisation indiqué à titre d'exemple non limitatif. La description se réfère aux dessins annexés sur lesquels :
- la figure **1** illustre un doseur de carburant de l'art antérieur muni d'une surface de détection de pression différentielle non endommagée, le clapet étant dans sa position ouverte ;
- la figure **2** illustre le doseur de la figure **1** lorsque la surface de détection de pression différentielle est percée ;
- la figure **3** représente un mode de réalisation du doseur de carburant selon l'invention, en fonctionnement normal, le clapet étant dans sa position fermée ;
- la figure **4** représente le doseur de la figure **3****,** en fonctionnement normal, le clapet étant dans sa position ouverte ;
- la figure **5** représente le doseur de la figure **3****,** en fonctionnement dégradé lorsque la surface de détection de pression différentielle est percée, le clapet étant dans sa position fermée et avant que le piston ne se soit déplacé ;
- la figure **6** représente le doseur de la figure **5****,** lorsque la surface de détection de pression différentielle est percée, le clapet étant dans sa position ouverte et le piston en position de régulation ;
- la figure **7** représente une variante du doseur de la figure **4****,** le piston n'étant pas couplé à la cage ; et
- la figure **8** représente le doseur de la figure **7** lorsque le piston est couplé à la cage.

La figure **1** qui illustre un doseur de carburant de l'art antérieur, a déjà été en partie décrite dans le préambule de la description. On précisera que la pompe est reliée à un réservoir de carburant **R** et que le dispositif de régulation **16** comporte une première chambre **26** en communication avec le circuit de refoulement **22.** De préférence, cette communication est réalisée par le biais d'une ouverture **28** ménagée en amont du clapet **24.**

Cette première chambre est, en fonctionnement normal, notamment délimitée par la surface de détection **18,** en l'espèce une membrane souple, de sorte que la pression de la première chambre est égale à la pression en entrée **14a** de la vanne de dosage **14.**

Le dispositif de régulation de l'art antérieur comporte en outre une deuxième chambre délimitée par la membrane **18** et communicant avec un circuit de sortie **32** qui relie la sortie **16b** du dispositif de régulation avec la sortie **14b** de la vanne de dosage **14.** On comprend donc que la pression de carburant dans la deuxième chambre est égale à la pression en sortie **14b** de la vanne de dosage **14.**

Un gicleur **30a** peut éventuellement être installé dans le circuit de sortie **32** afin d'amortir les mouvements du clapet

La référence **Q** indique le débit de carburant qui sort de la vanne. Il correspond au débit envoyé aux injecteurs du moteur (non représenté ici).

Sur cette figure **1****,** le clapet **24** est ouvert car la pression différentielle détectée par la membrane **18** est supérieure à la valeur prédéterminée imposée par le réglage du premier ressort **20.** Il s'ensuit, comme on l'a déjà expliqué ci-dessus, que l'excès de carburant fourni par la pompe retourne à l'entrée de celle-ci par le circuit de refoulement **22.**

En cas d'endommagement de la membrane **18,** une partie du carburant sortant de la pompe est libre de s'écouler à travers la membrane percée vers la deuxième chambre **30** puis vers la sortie 14b du doseur au travers de l'orifice **30a.** La différence de pression entre les première et deuxième chambre étant nulle ou très faible, le clapet reste en position fermée quelque soit la pression exercée en entrée. Le circuit de refoulement est fermé. Il en découle que tout le débit sortant de la pompe **12** est dirigé vers la sortie du doseur, soit au travers de la vanne **14,** soit au travers du dispositif de régulation **16** de la façon décrite ci-avant. Il s'ensuit que le dispositif de régulation à « delta-p constant » **16** ne fait plus son office et que la différence de pression aux bornes de la vanne **14** n'est plus constante. Il s'en suit que le débit délivré par le doseur ne varie pas en fonction de l'ouverture de la vanne de dosage **14** suivant la loi attendu, ce qui est contraire à la fonction première du doseur. De façon générale mais non exclusive, le débit est alors plus élevé qu'avec une membrane non percée.

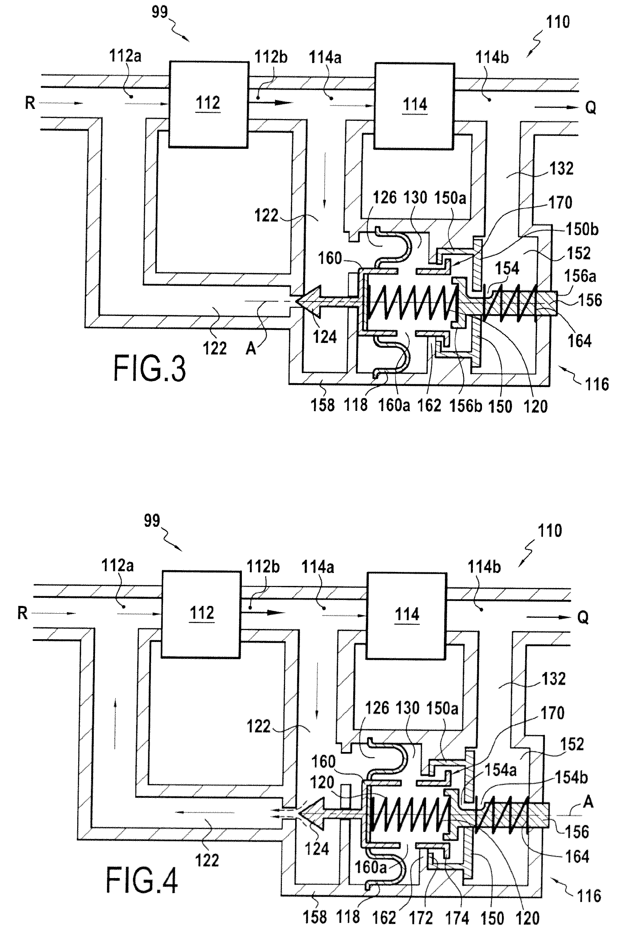

A l'aide des figures **3** à **6****,** on va maintenant décrire plus en détail un doseur de carburant **110** conforme à la présente invention.

Sur ces figures, on a représenté un circuit de carburant **99** comportant le doseur de carburant **110** selon l'invention alimenté par une pompe **112** et comprenant une vanne dosage **114** associée à un dispositif de régulation **116.**

Comme on le constate à l'aide de ces figures, le doseur de carburant **110** se distingue de celui de l'art antérieur par le fait que le dispositif de régulation **116** comporte en outre un piston **150** formant tiroir apte à se déplacer selon l'axe **A** du premier ressort **120,** cet axe étant également celui selon lequel le clapet **124** peut se déplacer.

Ce piston **150** délimite la deuxième chambre **130** d'une troisième chambre **152** reliée au circuit de sortie **132.** Par suite, la pression de carburant dans la troisième chambre **152** est égal à la pression de sortie de la vanne de dosage **114b.**

Ce piston **150** comporte un corps cylindrique **150a** qui s'étend axialement vers le clapet **124** depuis une paroi de piston **150b.**

Selon l'invention, la troisième chambre est reliée à la deuxième chambre par un canal **154** qui est dans cet exemple ménagé dans une tige de réglage **156** s'étendant selon l'axe **A.** On précise que cette tige de réglage **156** est montée en rotation sur un boitier **158** du dispositif de régulation **116.** Cette tige **156** présente une première extrémité **156a** formant vis qui fait saillie à l'extérieur du boitier **158,** ainsi qu'une seconde extrémité **156b** portant une extrémité du premier ressort **120.** Comme dans l'art antérieur, l'autre extrémité du premier ressort est reliée à la membrane souple **118** et au clapet **124.** Ce dispositif permet d'ajuster la précontrainte du premier ressort **120** par déplacement axial de l'extrémité du ressort. Dans l'exemple non exclusif représenté ici, la tige **156** se visse dans le boîtier **158** ce qui permet de modifier la position axiale de l'extrémité du ressort **120** et par suite la précontrainte de celui-ci. Plus précisément, le premier ressort **120** est préférentiellement logé dans une cage **160** mobile selon l'axe **A,** dont l'une des extrémités porte le clapet **124.**

Cette cage **160** présente des orifices **160a** pour permettre l'écoulement du carburant dans le dispositif de régulation.

Toujours à l'aide de la figure **3****,** on constate que le corps cylindrique **150a** est maintenu axialement contre une paroi **162** du boitier **158** qui s'étend transversalement par rapport à l'axe **A,** par un second ressort **164** qui s'étend axialement dans la troisième chambre entre le boitier **158** et le corps cylindrique **150a.** De préférence le second ressort est disposé autour de la tige de réglage **156.**

Dans cette position, appelée position de repos du piston **150,** on constate qu'une première extrémité **154a** du canal **154** débouche dans la deuxième chambre, tandis que la seconde extrémité **154b** du canal débouche dans la troisième chambre **152** si bien que ces deux chambres sont à la même pression.

La section de ce canal **154** peut éventuellement être ajustée par conception afin d'amortir les mouvements du clapet **124** comme le gicleur **30a** le faisait dans l'art antérieur.

On précise encore que lorsque le piston est dans sa position de repos, la cage est libre de coulisser par rapport au piston **150.** En l'espèce, la cage coulisse à l'intérieur du corps cylindrique **150a.** De plus, le second ressort **164** est dimensionné de sorte que le piston reste dans sa position de repos lorsque la membrane n'est pas endommagée.

C'est ainsi qu'en l'absence d'endommagement de la membrane **118,** le dispositif de régulation **116** selon l'invention fonctionne comme celui de l'art antérieur.

Sur la figure **3****,** la différence de pression de carburant aux bornes de la vanne de dosage **114** (c'est-à-dire entre la sortie **114b** et l'entrée **114a**) est inférieure à la valeur prédéterminée de sorte que la pression différentielle n'est pas suffisante pour contrer la force exercée par le premier ressort sur le clapet **124.** Ce dernier reste donc en position fermée et obture le circuit de refoulement.

Sur la figure **4****,** la différence de pression de carburant aux bornes de la vanne de dosage **114** est égale ou supérieure à la valeur prédéterminée, de sorte que la pression différentielle s'exerçant sur la membrane **118** génère une force égale ou supérieure à celle exercée par le premier ressort **120** de sorte que le clapet **124** s'ouvre. Le carburant peut alors s'écouler dans le circuit de refoulement **122,** ce qui provoque une baisse de la pression différentielle.

On comprend donc que lors du fonctionnement normal du doseur de carburant, c'est-à-dire lorsque la membrane **118** n'est pas percée, le piston **150** et le second ressort **164** ne jouent aucun rôle dans la régulation de la pression différentielle.

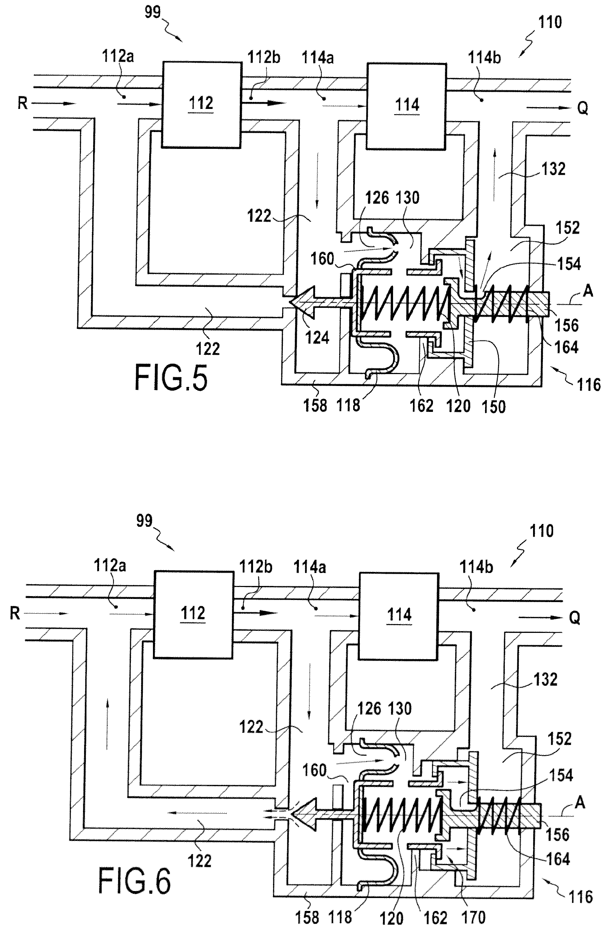

A l'aide des figures **5** et **6****,** on va maintenant expliquer le fonctionnement du dispositif de régulation en cas d'endommagement de la membrane **118.**

Pour un certain nombre de raisons, la membrane **118** peut se détériorer et par suite présenter alors un ou plusieurs trous de sorte que la première chambre est mise en communication fluidique avec la deuxième chambre. Un tel événement est illustré sur les figures **5** et **6****.** Il n'existe alors plus de différence de pression entre les première et deuxième chambres, de sorte que le premier ressort **120** amène le clapet dans sa position fermée, comme cela est illustré sur la figure **5****.**

Comme on le voit sur la figure **5****,** lorsque la membrane est percée, le carburant peut s'écouler au travers de cette dernière, puis successivement dans les première, deuxième et troisième chambres par le biais du canal **154.**

De préférence, le canal présente un diamètre petit devant le diamètre de la deuxième chambre, de sorte que le canal **154** joue le rôle de gicleur qui crée une perte de charge entre la deuxième chambre et la troisième chambre. Il en résulte une différence de pression entre ces deux chambres séparées par le piston, la pression dans la deuxième chambre étant supérieure à la pression dans la troisième chambre.

Si cette différence de pression est suffisante pour générer sur la surface du piston une **force F** supérieure à la force exercée sur la paroi de piston par le second ressort **164,** alors le piston est déplacé axialement vers la troisième chambre **152.**

Comme on le voit sur la figure **6****,** le piston formant tiroir **150** est pourvu d'un organe de couplage **170** pour coupler mécaniquement le tiroir avec la cage. Cet organe de couplage **170** comporte des doigts **172** s'étendant radialement vers l'axe **A** depuis une extrémité du corps de piston. L'extrémité de la cage qui s'étend à l'intérieur du corps de piston comporte quant à elle une surface de butée **174** formée d'une ou plusieurs saillies radiales qui sont aptes à coopérer avec les doigts **172** du corps de piston lors d'un déplacement axial du piston.

En se référant à la figure **6****,** on comprend que lorsque la force générée par le différentiel de pression aux bornes de la vanne de dosage devient supérieur à la force exercée par le second ressort **164,** le piston se déplace axialement vers la troisième chambre. Lors de ce déplacement, les doigts **172** du corps du piston viennent en contact axial avec la surface de butée **174** à la suite de quoi le piston **150** entraine la cage et le clapet vers la troisième chambre. Le clapet est alors amené dans sa position ouverte, ouvrant ainsi le circuit de refoulement **122.**

Ainsi, le piston **150** et les ressorts **120** et **164,** en coopération avec le clapet **124,** permettent-ils de réguler le différentiel de pression de carburant, et ce malgré l'endommagement de la membrane.

On évite ainsi l'augmentation non contrôlée du débit de carburant envoyé aux injecteurs et la modification non contrôlée de la relation entre le débit dosé et l'ouverture de la vanne **114** qui se produisent généralement en cas de casse de la membrane du doseur antérieur.

Par ailleurs, dans cet exemple, le déplacement du piston s'accompagne de l'obturation de la seconde extrémité **154b** du canal **154.** Cela permet de supprimer une autre cause de l'augmentation du débit délivré au moteur, en obturant une voie de communication entre la pompe **112** et les injecteurs.

Sans sortir du cadre de la présente invention, le canal peut être configuré de manière à ne jamais être obturé par le piston, dès lors que le débit de fuite créé par le canal reste acceptable.

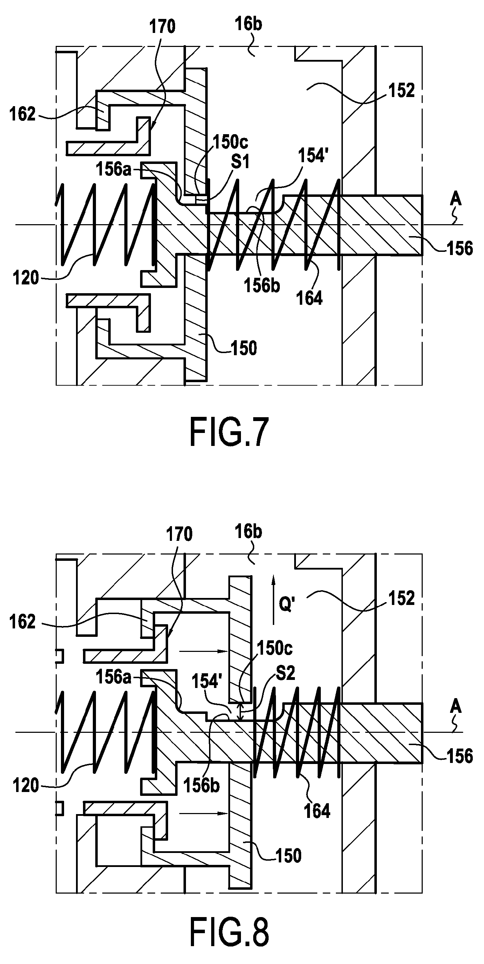

Selon une variante représentée sur les figures **7** et **8****,** le canal **154'** présente une première section **S1** et une deuxième section **S2** supérieure à la première section **S1.**

Comme on le voit sur la figure **7****,** la première section **S1** est définie entre la tête **156a** de la tige de réglage et le bord d'une ouverture **150c** ménagée dans le piston.

Par suite, lorsque le piston n'est pas couplé à la cage **160,** le carburant s'écoule au travers du canal **154'** par la première section **S1.**

En se référant maintenant à la figure **8****,** on comprend que la deuxième section **S2** est définie entre le fond d'un méplat **156b** formé dans le corps de la tige **156.**

Il est bien visible que la présence du méplat **156b** permet d'obtenir une deuxième section **S2** qui soit supérieure à la première section **S1.**

Lorsque le piston est dans sa position couplée de la figure **8****,** le bord de l'ouverture **150c** du piston est en regard du méplat **156b** de sorte que le carburant s'écoule par cette section **S2.**

On génère donc un débit excédentaire **Q'** calibré qui vient s'ajouter au débit **Q** sortant de la vanne de dosage **114.**

Cet excédent de débit est par exemple de 15 l/h si le débit sortant de la vanne de dosage est d'environ 300 l/h. Ce débit excédentaire est calibré de manière à ne pas être gênant pour la régulation de la vanne de dosage, tout en étant détectable.

La détection de ce débit excédentaire **Q'** est obtenue par le fait que le système de régulation de la vanne de dosage voit sa loi de régulation modifiée.

En effet, l'existence d'un débit **Q"** en entrée des injecteurs qui est supérieur au débit **Q** fourni uniquement par la vanne de dosage impose au système de régulation de diminuer le débit fourni par la vanne de dosage afin de retrouver le débit **Q** fourni lorsque la membrane fonctionne normalement. Cet écart est immédiatement détectable grâce à quoi le pilote peut être informé que la surface de détection de pression différentielle est endommagée.

## Revendications

1. Doseur de carburant (110) pour un moteur telle une turbomachine d'un engin volant destiné à être alimenté par une pompe (112) ayant une entrée (112a) et une sortie (112b), ledit doseur comportant :
- une vanne de dosage (114) ayant une entrée (114a) et une sortie (114b), ladite vanne, lorsqu'elle est montée, étant disposée en aval de la sortie de la pompe ;
- un circuit de refoulement (122), lorsqu'il est monté, reliant l'entrée de la vanne de dosage et l'entrée de la pompe ;
- un dispositif de régulation (116) de pression, comportant un clapet mobile apte à fermer et ouvrir le circuit de refoulement, une surface de détection de pression différentielle (118) fixée au clapet (124) délimitant axialement une première chambre (126) en communication avec l'entrée de la vanne de dosage et une deuxième chambre (130) en communication avec la sortie de la vanne de dosage, un premier ressort (120) disposé dans la deuxième chambre (130) tout en étant fixé à la surface de détection (118) de manière à exercer une poussée axiale sur le clapet dans un sens qui tend à fermer le circuit de refoulement, ledit doseur étant **caractérisé en ce que** le dispositif de régulation (116) comporte en outre un piston (150) délimitant axialement la deuxième chambre (130) d'une troisième chambre (152) reliée à la sortie de la vanne de dosage, ledit piston comportant un organe de couplage (170) apte à coopérer avec le clapet, un second ressort (164) disposé dans la troisième chambre tout en exerçant une poussée axiale sur le piston tendant à maintenir le piston découplé du clapet, le dispositif de régulation comportant également un canal (154) faisant communiquer la deuxième chambre (130) avec la troisième chambre (152).

2. Doseur de carburant selon la revendication 1, dans lequel la surface de détection de pression différentielle (118) est une membrane souple.

3. Doseur de carburant selon la revendication 1, dans lequel la surface de détection de pression différentielle (118) est un soufflet.

4. Doseur de carburant selon la revendication 2 ou 3, dans lequel le canal (154) est ménagé dans le piston (150).

5. Doseur de carburant selon la revendication 2 ou 3, dans lequel le canal (154) est ménagé dans un boitier (158).

6. Doseur de carburant selon l'une quelconque des revendications **1** à **5**, **caractérisé en ce que** le clapet (124) est monté à l'extrémité d'une cage (160) coulissante qui s'étend axialement dans la deuxième chambre, le premier ressort étant logé à l'intérieur de la cage tout en étant maintenu à son extrémité opposée au clapet par une tige de réglage (156) s'étendant entre la deuxième chambre et la troisième chambre.

7. Doseur de carburant selon la revendication **6,** dans lequel le canal est ménagé dans la tige de réglage (156).

8. Doseur de carburant selon les revendications **6** ou **7,** dans lequel le canal (154) est arrangé de telle manière qu'il soit obturé par le piston (150) lorsque ce dernier est couplé avec la cage (160).

9. Doseur de carburant selon les revendications **6** ou **7,** dans lequel le canal (154) est arrangé de telle manière que sa section ait une valeur définie différente de sa valeur initiale lorsque le piston (150) est couplé avec la cage (160).

10. Doseur de carburant selon l'une quelconque des revendications **6** à **9,** dans lequel le piston (150) présente la forme d'un tiroir et l'organe de couplage comporte des doigts (172) destinés à venir coopérer avec une surface de butée (174) de la cage (160), de manière à pouvoir déplacer axialement la cage et ouvrir le circuit de refoulement lorsque la surface de détection est endommagée.

11. Doseur de carburant selon l'une quelconque des revendications **6** à **10,** dans lequel le second ressort (164) s'étend autour de la tige de réglage (156).

12. Doseur de carburant selon l'une quelconque des revendications **6** à **11,** dans lequel la fonction du second ressort (164) est réalisée par un organe élastique.

13. Doseur de carburant selon l'une quelconque des revendications **6** à **12,** dans lequel la fonction du premier ressort (120) est réalisée par un organe élastique.

14. Circuit carburant (99) d'une turbomachine comportant une pompe et un doseur de carburant selon l'une quelconque des revendications **1** à **13.**

15. Turbomachine comportant un circuit de carburant (99) selon la revendication **14.**

## Patentansprüche

1. Treibstoffdosiervorrichtung (110) für einen Motor, wie eine Turbomaschine eines Fluggerätes, die dazu bestimmt ist, durch eine Pumpe (112), welche einen Einlass (112a) und einen Auslass (112b) aufweist, versorgt zu werden, wobei die Dosiervorrichtung umfasst:
- ein Dosierventil (114), das einen Einlass (114a) und einen Auslass (114b) aufweist, wobei das Ventil, wenn es eingebaut ist, dem Auslass der Pumpe nachgeordnet ist,
- einen Druckkreis (122), der, wenn er eingerichtet ist, den Einlass des Dosierventils und den Einlass der Pumpe verbindet,
- eine Druckregelungsvorrichtung (116), umfassend ein bewegliches Ventil, welches geeignet ist, den Druckkreis zu schließen und zu öffnen, eine Fläche zur Erfassung eines Differenzdrucks (118), die an dem Ventil (124) befestigt ist, das eine erste Kammer (126) in Verbindung mit dem Einlass des Dosierventils und eine zweite Kammer (130) in Verbindung mit dem Auslass des Dosierventils axial begrenzt, eine erste Feder (120), die in der zweiten Kammer (130) angeordnet und dabei an der Erfassungsfläche (118) befestigt ist, um auf das Ventil in einer Richtung einen axialen Schub auszuüben, der bestrebt ist, den Druckkreis zu schließen, wobei die Dosiervorrichtung **dadurch gekennzeichnet ist, dass** die Regelungsvorrichtung (116) ferner einen Kolben (150), der die zweite Kammer (130) von einer dritten Kammer (152), welche mit dem Auslass des Dosierventils verbunden ist, axial abgrenzt, wobei der Kolben ein Kopplungsorgan (170) umfasst, das geeignet ist, mit dem Ventil zusammenzuwirken, eine zweite Feder (164), die in der dritten Kammer angeordnet ist und dabei auf den Kolben einen axialen Schub ausübt, der bestrebt ist, den Kolben von dem Ventil entkoppelt zu halten, umfasst, wobei die Regelungsvorrichtung auch einen Kanal (154) umfasst, der die zweite Kammer (130) mit der dritten Kammer (152) in Verbindung bringt.

2. Treibstoffdosiervorrichtung nach Anspruch 1, bei der die Fläche zur Erfassung eines Differenzdrucks (118) eine flexible Membran ist.

3. Treibstoffdosiervorrichtung nach Anspruch 1, bei der die Fläche zur Erfassung eines Differenzdrucks (118) ein Balg ist.

4. Treibstoffdosiervorrichtung nach Anspruch 2 oder 3, bei der der Kanal (154) in dem Kolben (150) ausgebildet ist.

5. Treibstoffdosiervorrichtung nach Anspruch 2 oder 3, bei der der Kanal (154) in einem Gehäuse (158) ausgebildet ist.

6. Treibstoffdosiervorrichtung nach einem der Ansprüche 1 bis 5, **dadurch gekennzeichnet, dass** das Ventil (124) an dem Ende eines Schiebekäfigs (160), der sich in der zweiten Kammer axial erstreckt, angebracht ist, wobei die erste Feder innerhalb des Käfigs untergebracht ist und dabei an ihrem von dem Ventil abgewandten Ende durch eine Stellstange (156), die sich zwischen der zweiten Kammer und der dritten Kammer erstreckt, gehalten ist.

7. Treibstoffdosiervorrichtung nach Anspruch 6, bei der der Kanal in der Stellstange (156) ausgebildet ist.

8. Treibstoffdosiervorrichtung nach den Ansprüchen 6 oder 7, bei der der Kanal (154) derart angeordnet ist, dass er durch den Kolben (150) verschlossen wird, wenn letzterer mit dem Käfig (160) gekoppelt ist.

9. Treibstoffdosiervorrichtung nach den Ansprüchen 6 oder 7, bei der der Kanal (154) derart angeordnet ist, dass sein Querschnitt einen definierten Wert, der von seinem Ausgangswert verschieden ist, aufweist, wenn der Kolben (150) mit dem Käfig (160) gekoppelt ist.

10. Treibstoffdosiervorrichtung nach einem der Ansprüche 6 bis 9, bei der der Kolben (150) die Form eines Schiebers aufweist und das Kopplungsorgan Finger (172) umfasst, die dazu bestimmt sind, mit einer Anschlagfläche (174) des Käfigs (160) zusammenzuwirken, um den Käfig axial bewegen und den Druckkreis öffnen zu können, wenn die Erfassungsfläche beschädigt ist.

11. Treibstoffdosiervorrichtung nach einem der Ansprüche 6 bis 10, bei der die zweite Feder (164) sich um die Stellstange (156) herum erstreckt.

12. Treibstofifdosiervorrichtung nach einem der Ansprüche 6 bis 11, bei der die Funktion der zweiten Feder (164) durch ein elastisches Organ erfüllt ist.

13. Treibstoffdosiervorrichtung nach einem der Ansprüche 6 bis 12, bei der die Funktion der ersten Feder (120) durch ein elastisches Organ erfüllt ist.

14. Treibstofifkreis (99) einer Turbomaschine, der eine Pumpe und eine Treibstoffdosiervorrichtung nach einem der Ansprüche 1 bis 13 umfasst.

15. Turbomaschine, die einen Treibstoffkreis (99) nach Anspruch 14 umfasst.

## Claims

1. A fuel flowmeter (110) for an engine such as a turbomachine for flying machine for being fed by a pump (112) having an inlet (112a) and an outlet (112b), said flowmeter comprising:
· a metering valve (114) having an inlet (114a) and an outlet (114b), said valve, when it is mounted, being arranged downstream from the outlet of the pump;
· a return circuit (122), when it is mounted, connecting the inlet of the metering valve to the inlet of the pump; and
· a pressure regulator device (116) comprising a movable valve member suitable for closing and opening the return circuit, a pressure difference detection surface (118) fastened to the valve member (124) and axially separating a first chamber (126) in communication with the inlet of the metering valve from a second chamber (130) in communication with the outlet from the metering valve, a first spring (120) arranged in the second chamber (130) while being fastened to the detection surface (118) in such a manner as to exert axial thrust on the valve member in a direction tending to close the return circuit, said flowmeter being **characterized in that** the regulator device (116) further comprises a piston (150) axially separating the second chamber (130) from a third chamber (152) connected to the outlet of the metering valve, said piston including a coupling member (170) suitable for co-operating with the valve member, a second spring (164) arranged in the third chamber while exerting axial thrust on the piston tending to keep the piston decoupled from the valve member, the regulator device also including a channel (154) putting the second chamber (130) in communication with the third chamber (152).

2. A fuel flowmeter according to claim 1, wherein the pressure difference detection surface (118) is a flexible diaphragm.

3. A fuel flowmeter according to claim 1, wherein the pressure difference detection surface (118) is a bellows.

4. A fuel flowmeter according to claim 2 or claim 3, wherein the channel (154) is arranged in the piston (150).

5. A fuel flowmeter according to claim 2 or claim 3, wherein the channel (154) is arranged in a housing (158).

6. A fuel flowmeter according to any one of claims 1 to 5, **characterized in that** the valve member (124) is mounted at the end of a sliding cage (160) that extends axially within the second chamber, the first spring being housed inside the cage while being held at its opposite end from the valve member by an adjustment rod (156) extending between the second chamber and the third chamber.

7. A fuel flowmeter according to claim 6, wherein the channel is formed in the adjustment rod (156).

8. A fuel flowmeter according to claim 6 or claim 7, wherein the channel (154) is arranged in such a manner that it is closed by the piston (150) when the piston is coupled with the cage (160).

9. A fuel flowmeter according to claim 6 or claim 7, wherein the channel (154) is arranged in such a manner that its section has a defined value that is different from its initial value when the piston (150) is coupled with the cage (160).

10. A fuel flowmeter according to any one of claims 6 to 9, wherein the piston (150) is in the form of a slide and the coupling member comprises fingers (172) designed to co-operate with an abutment surface (174) of the cage (160) so as to be capable of moving the cage axially and opening the return circuit when the detection surface is damaged.

11. A fuel flowmeter according to any one of claims 6 to 10, wherein the second spring (164) extends around the adjustment rod (156).

12. A fuel flowmeter according to any one of claims 6 to 11, wherein the function of the second spring (164) is performed by a resilient member.

13. A fuel flowmeter according to any one of claims 6 to 12, wherein the function of the first spring (120) is performed by a resilient member.

14. A fuel circuit (99) for a turbomachine including a pump and a fuel flowmeter according to any one of claims 1 to 13.

15. A turbomachine including a fuel circuit (99) according to claim 14.
